# FASCICULE DE BREVET EUROPEEN

(11) **EP 0 627 614 B1**
(45) Date de publication et mention de la délivrance du brevet: **03.09.1997**
(21) Numéro de dépôt: 94401169.1
(22) Date de dépôt: 26.05.1994
(51) Int. Cl.: G01F 3/08

(54) **Chambre cylindrique de compteur de liquide à piston oscillant**
Zylindrische Messkammer eines Ringkolbenzählers
Cylindrical chamber of a flowmeter with an oscillating piston

(30) Priorité: 02.06.1993 FR 9306591
(43) Date de publication de la demande: 07.12.1994
(73) Titulaire: SAPPEL Société Anonyme française, 68304 Saint-Louis (FR)
(72) Inventeur: Robitaille, Thierry, F-75116 Paris (FR); Walch, Frédéric, F-75116 Paris (FR)
(74) Mandataire: Schmit, Christian Norbert Marie

(56) Documents cités:
- DE-U- 8 903 379
- FR-A- 792 011
- FR-A- 2 439 389
- GB-A- 733 371
- US-A- 2 178 492
- US-A- 2 789 434
- US-A- 3 369 399

## Description

La présente invention concerne le domaine des compteurs de liquide et plus précisément le domaine des compteurs de liquide à piston oscillant. L'utilisation de tels compteurs de liquide à piston oscillant est une technique bien connue de l'homme du métier, reconnue pour sa précision et sa fiabilité. Un compteur tel que décrit dans le préambule de la revendication 1 est par exemple divulgué dans le document US-A-3 369 399.

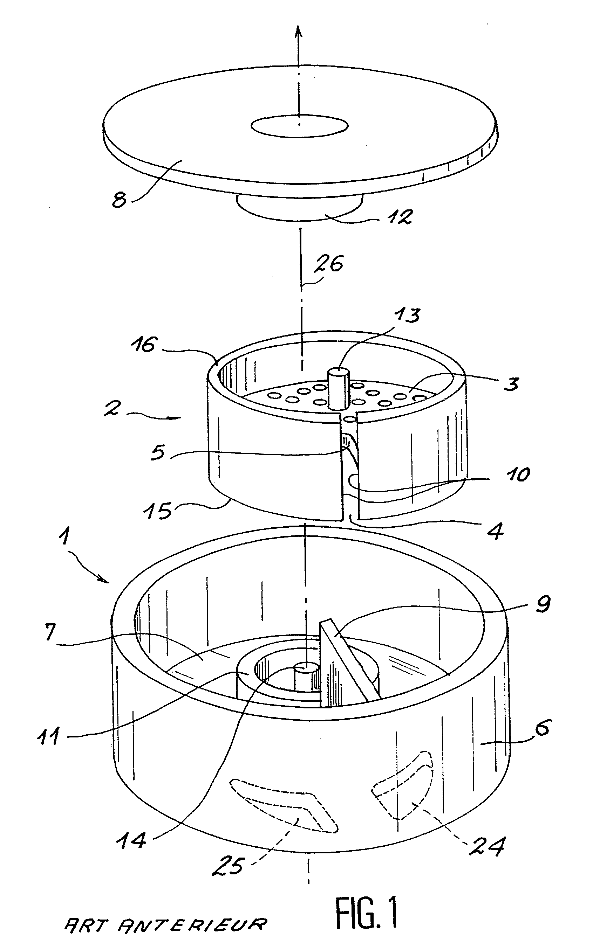

L'élément principal de ces compteurs est constitué par une chambre cylindrique référencée 1 en figure 1. Cette chambre comporte une paroi latérale 6, un fond 7, un couvercle 8, et renferme un piston 2. Un petit cylindre 11 est supporté par le fond 7 de la chambre 1 alors qu'un petit cylindre 12 de même diamètre est porté par le couvercle 8. Ces deux petits cylindres sont centrés par rapport à l'axe 26 de la chambre 1. Par ailleurs, un galet 14 est placé au centre du petit cylindre 11. Une cloison fixe 9 à faces parallèles est disposée sur le coté interne de la paroi latérale 6 de la chambre et se prolonge radialement sur toute la hauteur de cette paroi latérale, jusqu'aux petits cylindres 11,12. Le piston 2 est constitué par un cylindre divisé en sa partie médiane par une paroi plane 3 perforée. Le diamètre du piston est sensiblement inférieur au diamètre de la chambre 1. Une échancrure verticale 4 ménagée le long de l'une des génératrices du piston débouche, au niveau de la paroi plane, sur une ouverture 5 appelée poire du piston. La paroi plane 3 du piston est munie au centre de ses deux faces de tétons 13. Un téton est disposé au-dessus de la paroi plane et un téton est disposé au-dessous de la paroi plane. Ce dernier a un diamètre supérieur au diamètre du téton du dessus de la paroi plane 3. Lors de la fermeture du couvercle 8 de la chambre, les bords des deux petits cylindres 11,12 rejoignent la paroi plane 3 du piston alors interposée entre les deux petits cylindres 11, 12 tout en demeurant libre de mouvements plans. D'autre part, la cloison fixe 9 s'engage entre les bords 10 de l'échancrure 4 et à l'intérieur de la poire 5 du piston.

Des lumières de forme particulière sont ménagées sur le fond 7 de la chambre, de part et d'autre de la cloison fixe 9. Lorsque le compteur est en fonctionnement, le liquide pénètre dans la chambre par l'une des lumières appelée lumière d'admission 24 et ressort par une autre lumière appelée lumière d'échappement 25. L'espace compris entre la surface extérieure du piston 2 et la surface intérieure de la chambre 1 constitue deux alvéoles. De même, l'espace compris entre la surface intérieure du piston et la surface extérieure des petits cylindres 11,12 constitue deux autres alvéoles. Les deux alvéoles débouchant sur la lumière d'admission sont appelés alvéoles d'admission et les deux alvéoles débouchant sur la lumière d'échappement sont appelés alvéoles d'échappement. Le liquide à compter entrant dans les alvéoles d'admission communique son énergie au piston qui se déplace en rotation, tout en déplaçant un volume de liquide donné vers l'extérieur de la chambre, par la lumière d'échappement. Le piston oscille ainsi le long de la cloison fixe selon un mouvement typique de la technique du piston oscillant dans lequel l'axe du piston décrit un cercle autour de l'axe de la chambre cylindrique, tandis que les bords 10 de l'échancrure, communément appelés lèvres du piston, glissent le long des parois de la cloison fixe. Le téton du dessous de la paroi plane 3, est guidé en rotation le long des parois internes des petit(s) cylindre(s) 11,12 et autour du galet 14. La rotation du téton du dessus de la paroi plane 3 incrémente un compte-tours avec totalisateur.

Ces compteurs de l'art antérieur présentent un certain nombre d'inconvénients liés aux interactions mécaniques imparfaites qui existent entre le piston et les éléments fixes de la chambre.

Tout d'abord, la précision des compteurs est limitée par l'existence de fuites de liquide qui se produisent entre les différents alvéoles et notamment entre les lèvres du piston et la cloison fixe, mais aussi entre des bords inférieur et supérieur du piston et respectivement, le fond et le couvercle de la chambre, et entre les bords des petits cylindres et la paroi plane du piston.

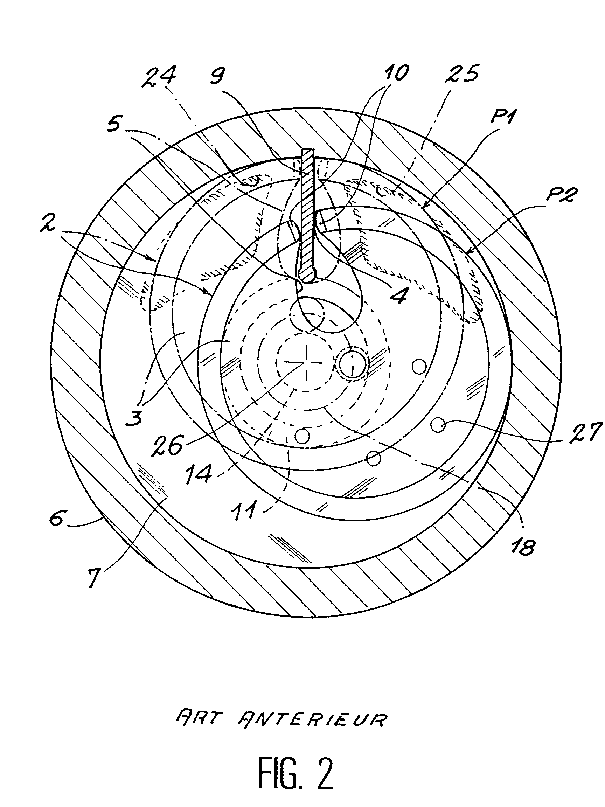

Ainsi que l'illustre la figure 2, il existe une position intermédiaire P2 du piston 2 sur la cloison fixe 9, pour laquelle les bords 10 de l'échancrure 4 sont tous deux directement en contact avec la cloison. Pour une telle position P2, le jeu est minimum. Néanmoins, pour que la position P2 soit possible, il est nécessaire que l'écartement des bords de l'échancrure soit dans une large mesure, supérieur à l'épaisseur de la cloison fixe 9. Cela a pour conséquence de laisser un jeu transitoire par lequel se produiront des fuites de liquide lors des différentes phases du mouvement oscillant du piston.

Par ailleurs, d'autres fuites de liquide sont dues à l'existence de jeux entre les bords inférieur 15 et supérieur 16 du piston 2 et respectivement, le fond 7 et le couvercle 8 de la chambre. Pour limiter ces fuites, la solution proposée de l'état de la technique consiste à diminuer ces jeux. Cette solution a pour inconvénient de sensibiliser le compteur aux impuretés que comporte souvent le liquide à compter.

La même solution employée pour réduire les fuites de liquide existant entre la paroi plane 3 du piston et les bords des petits cylindres 11, 12 entraîne les mêmes inconvénients.

La précision des compteurs est en outre limitée par l'existence de frottements notamment au niveau des bords inférieur et supérieur du piston, contre le fond et le couvercle de la chambre.

Par ailleurs, le fonctionnement des compteurs est relativement bruyant, en particulier quand le débit de liquide introduit dans le compteur est important, c'est-à-dire quand la vitesse de rotation du piston est élevée.

En fait, le jeu maximum existant entre la cloison fixe et les bords 10 de l'échancrure 4 est obtenu pour la position P1 représentée en figure 2, pour laquelle la cloison fixe 9 est entièrement engagée à l'intérieur du piston 2. Or, dans cette position, le piston change brutalement de bord d'appui sur la cloison. Ce changement s'accompagnant naturellement d'un claquement bruyant.

De plus, les frottements du piston avec les éléments fixes de la chambre sont générateurs de bruit. C'est le cas, en particulier, des frottements entre les bords inférieur et supérieur du piston contre respectivement le fond et le couvercle de la chambre.

Enfin, l'usure des composants de la chambre est importante.

En effet, le profil angulaire des lèvres du piston référencées 10 en figure 2 implique un contact desdites lèvres avec la cloison fixe 9 le long d'une même ligne, constituant alors une contrainte d'usure linéaire.

Evidemment, d'autres zones d'usure existent et notamment au niveau du contact entre les bords inférieur et supérieur du piston avec la chambre.

Le but de l'invention est de réaliser une chambre cylindrique de compteur à piston oscillant qui remédie à moindres frais aux problèmes exposés ci-dessus.

L'invention a pour objet une chambre cylindrique de compteur de liquide à piston oscillant comportant, une paroi latérale, un fond, un couvercle, une cloison fixe réalisée en matière rigide, et renfermant un piston maintenu le long de ladite cloison fixe par les bords d'une échancrure verticale débouchant au niveau d'une paroi plane dudit piston sur une ouverture, deux lumières au moins étant ménagées dans le fond de la chambre cylindrique, caractérisée en ce que le profil de la cloison fixe est en double concave et en ce que le profil des bords de l'échancrure est en arc de cercle. Selon une autre caractéristique essentielle de l'invention, le profil de la cloison fixe est défini par un tracé géométrique cinématique du profil enveloppe des bords de l'échancrure.

En outre, et selon une autre caractéristique essentielle de l'invention, les bords inférieur et/ou supérieur du piston ainsi que les bords des éventuels petits cylindres, comportent un sillon.

D'autres caractéristiques et avantages de l'invention en objet apparaîtront à la lecture de la description qui suit, rédigée en référence aux dessins annexés dans lesquels :
- la figure 1 est une vue en perspective et éclatée d'une chambre cylindrique de compteur de liquide à piston oscillant selon l'art antérieur ;
- la figure 2 illustre en coupe transversale au niveau de la paroi plane du piston, une chambre cylindrique de compteur de liquide à piston oscillant selon l'art antérieur ;
- la figure 3 représente en coupe longitudinale une chambre cylindrique de compteur de liquide à piston oscillant selon l'invention ;
- la figure 4 illustre en coupe transversale au niveau de la paroi plane du piston, une chambre cylindrique de compteur de liquide à piston oscillant selon l'invention ;
- la figure 5 schématise le mode de construction géométrique utilisé pour définir le profil d'une cloison fixe selon l'invention ;
- la figure 6 représente en coupe longitudinale un piston selon l'invention, et
- la figure 7 est une vue détaillée et en coupe du bord inférieur du piston en contact avec le fond d'une chambre cylindrique de compteur de liquide à piston oscillant selon l'invention.

Les figures 1 et 2 ayant été décrites dans le préambule ci-dessus, leur étude ne sera pas reprise ici mais elles font partie intégrante de la description, notamment par utilisation des mêmes références dans l'ensemble des figures.

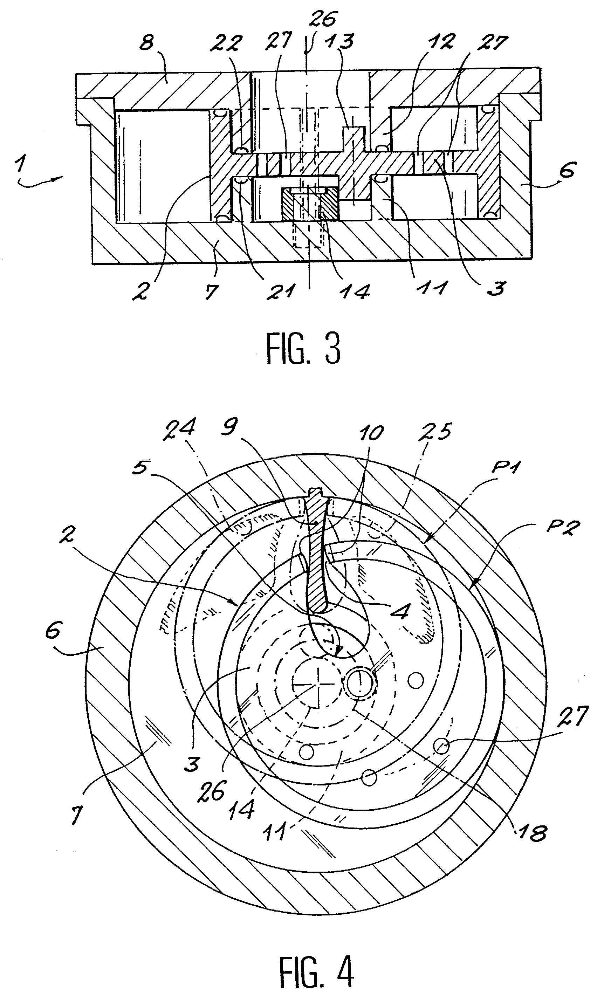

Sur la figure 3, on a représenté en coupe longitudinale, une chambre cylindrique 1 de compteur de liquide à piston oscillant selon l'invention.

Cette chambre cylindrique comporte une paroi latérale 6 fermée à son extrémité inférieure par un fond 7, et à son extrémité supérieure par un couvercle 8.

Elle renferme un piston 2 constitué par un cylindre creux dont le diamètre est sensiblement inférieur au diamètre du cylindre 6 de la chambre 1. Le piston 2 est retenu au sein de la chambre, entre le fond 7, le couvercle 8 et la paroi latérale 6. De plus, le piston est habituellement divisé en sa partie médiane par une paroi plane 3 perforée par des trous débouchants 27.

Deux tétons 13 font saillie de chaque coté de la paroi plane 3, au niveau de l'axe du piston. Le téton du dessus de la paroi plane a un diamètre inférieur au téton du dessous. Ce dernier est alors au contact de la surface interne d'un petit cylindre 11 concentrique supporté par le fond 7. Un autre petit cylindre 12 concentrique de diamètre sensiblement égal au diamètre du petit cylindre 11 est porté par le couvercle 8 de la chambre 1.

Les bords des petits cylindres 11,12 viennent au contact de la paroi plane 3 du piston tout en laissant cette dernière libre dans son plan.

Eventuellement, un galet 14 peut être placé au centre du petit cylindre 11 à proximité du téton inférieur de la paroi plane.

Comme illustré en figure 4, une échancrure verticale 4 est ménagée sur la hauteur du piston 2 selon un écartement préférentiellement constant. Les bords de l'échancrure ou lèvres du piston 10 ont un profil en arc de cercle.

Au niveau de la paroi plane 3, l'échancrure verticale 4 débouche sur une ouverture 5 communément appelée poire du piston, en référence à sa forme en poire.

La chambre cylindrique comporte une cloison fixe 9 qui est solidaire de la paroi latérale 6. Cette cloison est réalisée en matière rigide telle qu'un plastique dur. Elle est radiale et se prolonge jusqu'aux petits cylindres 11,12, sur toute la hauteur de la chambre. Puisque l'écartement de l'échancrure 4 est supérieur à l'épaisseur de la cloison fixe 9, le piston peut être maintenu le long de ladite cloison fixe, par les bords 10 de l'échancrure. La cloison fixe 9 est alors engagée au niveau de la paroi plane 3 du piston, dans la poire 5 du piston.

Deux lumières au moins 24,25 sont ménagées sur le fond 7 de la chambre 1, de part et d'autre de la cloison fixe 9. L'une des lumière est dite lumière d'admission 24, l'autre est dite lumière d'échappement 25.

Selon l'invention, la cloison fixe 9 a un profil en double concave. La double concavité du profil de la cloison fixe 9 peut être quelconque mais elle est avantageusement déterminée par la méthode du tracé du profil de Laparci qui correspond en fait au tracé cinématique du profil enveloppe des lèvres 10 du piston.

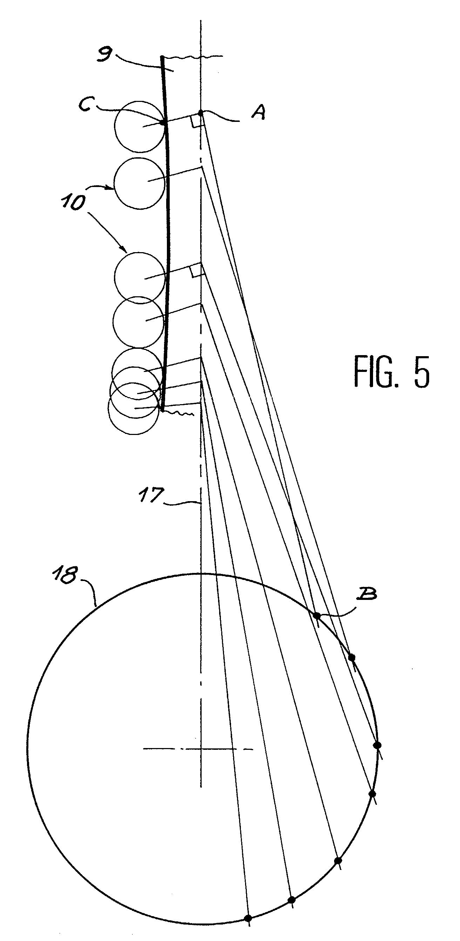

La figure 5 a pour objet de montrer précisément comment définir simplement la double concavité de la cloison fixe 9 par la méthode de Laparci. Si l'on réalise l'hypothèse du choix d'un profil circulaire des lèvres 10 du piston. Soient A, B, C, trois points du plan formé par la paroi plane 3 du piston, tels que A est un point du plan médian de la cloison fixe 9 et B est un point du cylindre généré par la rotation de l'axe du piston. A appartient donc à la droite référencée 17 sur la figure 5 et B appartient au cercle 18. Le profil de la cloison fixe 9 est défini par l'ensemble des points C du segment AC orthogonal au segment AB, tel que AB correspond au rayon du piston et AC correspond à la moitié au plus de la largeur de l'échancrure. Il suffit donc, pour déterminer le profil de la cloison fixe 9, de faire coulisser le point A le long de l'axe 17, le point B sur le cercle 18, et de déterminer l'ensemble des points C en traçant le segment AC orthogonal au segment AB.

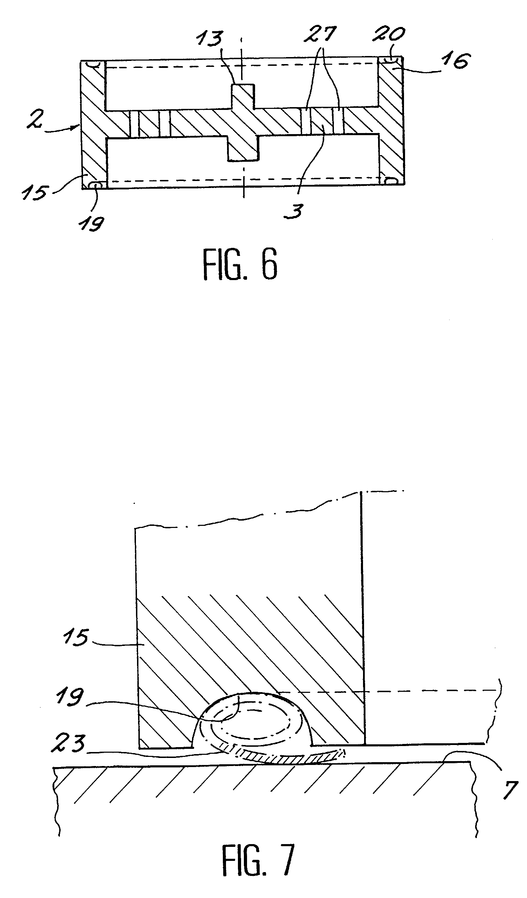

Par ailleurs, l'invention vise la réalisation de sillons 19 20 sur des bords inférieur 15 et supérieur 16 du piston 2. La figure 6 est une vue en coupe longitudinale, d'un piston selon l'invention. Les sillons 19, 20 sont avantageusement ménagés sur l'entière circonférence du bord inférieur 15 du piston, et sur la circonférence du bord supérieur 16 du piston 2. Néanmoins, un unique sillon peut être réalisé seulement sur le bord inférieur ou seulement sur le bord supérieur du piston.

Le cas échéant, des sillons 21, 22 sont ménagés sur les bords des petits cylindres 11, 12 en regard de la paroi plane 3 ainsi que l'illustre la figure 3.

Comme représenté en figure 7, le profil des sillons 19, 20, 21, 22 est en arc de cercle.

Le liquide à compter pénètre par la lumière d'admission 24 ménagée dans le fond 7 de la chambre cylindrique 1 et sort par la lumière d'échappement 25. Le flux de liquide entrant induit alors une rotation du piston au sein de ladite chambre pour laquelle l'axe du piston décrit un cercle 18 autour de l'axe de la chambre cylindrique. Les lèvres 10 du piston glissent le long des faces de la cloison fixe 9. Eventuellement, le mouvement du piston est guidé par le téton du dessous de la paroi plane du piston, le long des parois internes des petits cylindres 11, 12 et le long des parois du galet 14.

Le glissement des lèvres du piston sur la cloison fixe 9 ne déforme le profil rigide et dur de cette cloison qui reste constant pendant le comptage.

Le déplacement des lèvres 10 du piston 1 est du type roulement-glissement. Un profil en arc de cercle des lèvres 10 répartit donc l'usure sur toute la surface desdites lèvres sans créer de contraintes d'usure particulière.

Pour chaque position du piston dans la chambre, l'épaisseur de la cloison fixe 9 est telle que le jeu séparant les lèvres des côtés de la cloison fixe est approximativement constant et minimum. Par exemple, dans la position P1 du piston représentée en figure 4, les lèvres du piston sont au contact de la base de la cloison fixe et des parois latérales 6 de la chambre. L'épaisseur de la cloison est telle que le jeu est minimum et par suite, limite les fuites et les claquements qui pourraient se produire. La précision du compteur est alors améliorée et le niveau de bruit du compteur en fonctionnement est diminué.

En ce qui concerne les sillons 19, 20, 21, 22 ménagés sur les bords 15, 16 du piston et sur les bords des petits cylindres 11, 12, le liquide circulant dans la chambre 1 forme, lors de son passage dans la cavité que constituent les sillons, un tourbillon 23 tel que représenté en figure 7. Ce tourbillon a pour effet de limiter les fuites de liquide entre d'une part, les bords inférieur et supérieur du piston et respectivement le fond 7 et le couvercle 8 de la chambre 1 et, d'autre part, au niveau des petits cylindres 11, 12. De plus, ce tourbillon 23 crée une sorte de matelas hydraulique, lequel matelas réduit les frottements entre les éléments mécaniques en contact dynamique. Le niveau de bruit et l'usure sont alors réduits, la précision du compteur est augmentée.

L'invention s'applique aux compteurs de liquide et notamment aux compteurs d'eau et il est bien évident que la présente description de la chambre 1 relativement aux figures 3 à 7 ne constitue qu'un exemple de réalisation, d'autres modes de réalisation pouvant être implicitement déduits tout en restant dans le cadre de l'invention.

## Revendications

1. Chambre cylindrique de compteur de liquide à piston oscillant comportant, une paroi latérale (6), un fond (7), un couvercle (8), une cloison fixe (9) réalisée en matière rigide, et renfermant un piston (2) maintenu le long de ladite cloison fixe par les bords (10) d'une échancrure (4) verticale débouchant au niveau d'une paroi plane (3) dudit piston sur une ouverture (5), deux lumières au moins étant ménagées dans ladite chambre cylindrique, caractérisée en ce que le profil des bords (10) de l'échancrure (4) est en arc de cercle et en ce que le profil de la cloison fixe (9) est en double concave.

2. Chambre cylindrique de compteur de liquide à piston oscillant selon la revendication 1, caractérisée en ce que le profil de la cloison fixe (9) est défini par l'ensemble des points C du segment AC orthogonal au segment AB, où A, B, C appartiennent au plan formé par la paroi plane (3), A appartient au plan médian de la cloison fixe (9), B au cylindre généré par la rotation de l'axe du piston (2), le segment AB ayant une longueur égale au rayon du piston et le segment AC à la moitié au plus de la largeur de l'échancrure.

3. Chambre cylindrique de compteur de liquide à piston oscillant selon la revendication 2, caractérisée en ce que la longueur du segment AC est égale à la moitié de la largeur de l'échancrure (4).

4. Chambre cylindrique de compteur de liquide à piston oscillant selon la revendication 1, caractérisée en ce que la chambre comporte au moins un petit cylindre concentrique (11 ou 12) et en ce que la paroi plane (3) du piston (2) comporte au moins un téton central (13).

5. Chambre cylindrique de compteur de liquide à piston oscillant selon l'une des revendications 1 à 4, caractérisée en ce qu'au moins l'un des bords inférieur ou supérieur du piston comporte un sillon (19, 20).

6. Chambre cylindrique de compteur de liquide à piston oscillant selon l'une des revendications 4 ou 5, caractérisée en ce qu'au moins un petit cylindre (11, 12) comporte un sillon (21, 22) sur son bord en regard de la paroi plane (3).

7. Chambre cylindrique de compteur de liquide à piston oscillant selon l'une des revendications 5 ou 6, caractérisée en ce que le profil des sillons est en arc de cercle.

8. Compteur de liquide à piston oscillant caractérisé en ce qu'il comporte une chambre cylindrique de compteur de liquide à piston oscillant selon l'une des revendications précédentes.

## Patentansprüche

1. Zylindrische Meßkammer eines Ringkolbenzählers umfassend eine Seitenwand (6), einen Boden (7), einen Deckel (8), eine feste Trennwand (9) aus einem starren Material und enthaltend einen Kolben (2), der längs der festen Trennwand durch die Begrenzungskanten (10) einer vertikalen Aussparung 4 gehalten ist, die auf dem Niveau einer ebenen Wand (3) des Kolbens in eine Öffnung (5) mündet, wobei zumindest zwei Durchtrittsöffnungen in der zylindrischen Meßkammer vorgesehen sind, dadurch gekennzeichnet, daß das Profil der Begrenzungskanten (10) der Ausnehmung (4) kreisbogenförmig ausgebildet ist und daß das Profil der festen Trennwand (9) doppelkonkav ist.

2. Zylindrische Meßkammer eines Ringkolbenzählers nach Anspruch 1, dadurch gekennzeichnet, daß das Profil der festen Trennwand (9) definiert ist durch die Summe der Punkte C des Kreisabschnittes AC senkrecht zum Kreisabschnitt AB, wobei A, B, C zur Ebene gehören, die durch die ebene Wand (3) gebildet ist, wobei A zur Mittelebene der festen Trennwand (9) gehört, B zu einem Zylinder gehört, der durch Rotation der Achse des Kolbens (2) erzeugt ist, der Kreisabschnitt AB eine Länge aufweist, die dem Radius des Kolbens entspricht und der Kreisabschnitt AC höchstens der Breite der Aussparung entspricht.

3. Zylindrische Meßkammer eines Ringkolbenzählers nach Anspruch 2, dadurch gekennzeichnet, daß die Länge des Kreisabschnittes AC der Hälfte der Breite der Aussparung (4) entspricht.

4. Zylindrische Meßkammer eines Ringkolbenzählers nach Anspruch 1, dadurch gekennzeichnet, daß die Kammer zumindest einen kleinen konzentrischen Zylinder (11 oder 12) umfaßt und daß die ebene Wand (3) des Kolbens (2) zumindest einen zentralen Ansatz (13) aufweist.

5. Zylindrische Meßkammer eines Ringkolbenzählers nach einem der Ansprüche 1 bis 4, dadurch gekennzeichnet, daß zumindest eine der Begrenzungskanten, entweder die untere oder die obere Begrenzungskante des Kolbens eine Rille (19, 20) aufweist.

6. Zylindrische Meßkammer eines Ringkolbenzählers nach Anspruch 4 oder 5, dadurch gekennzeichnet, daß zumindest ein kleiner Zylinder (11, 12) an seiner der ebenen Wand (3) zugewandten Begrenzungskante eine Rille (21, 22) aufweist.

7. Zylindrische Meßkammer eines Ringkolbenzählers nach Anspruch 5 oder 6, dadurch gekennzeichnet, daß das Profil der Rillen kreisbogenförmig ist.

8. Ringkolbenzähler, dadurch gekennzeichnet, daß er eine zylindrische Kammer eines Ringkolbenzählers entsprechend einem der vorhergehenden Ansprüche aufweist.

## Claims

1. A cylindrical chamber of a liquid counter with an oscillating piston comprising a side wall (6), a base (7), a lid (8), a fixed partition (9) made of rigid material and enclosing a piston (2) held along the said fixed partition by the edges (10) of a vertical scallop (4) opening at the level of a plane partition (3) of the said piston into an aperture (5), at least two ports being housed in the cylindrical chamber, characterised in that the profile of the edges (10) of the scallop (4) is in the form of an arc and in that the profile of the fixed partition (9) is double concave.

2. Cylindrical chamber of a liquid counter with an oscillating piston according to claim 1, characterised in that the profile of the fixed partition (9) is defined by all the points C of the segment AC at right-angles to the segment AB, where A, B and C belong to the plane formed by the plane partition (3), A belongs to the median plane of the fixed partition (9), B to the cylinder generated by rotation of the axis of the piston (2), the segment AB having a length equal to the radius of the piston and the segment AC to half at most of the width of the scallop.

3. Cylindrical chamber of a liquid counter with an oscillating piston according to claim 2, characterised in that the length of the segment AC is equal to half the width of the scallop (4).

4. Cylindrical chamber of a liquid counter with an oscillating piston according to claim 1, characterised in that the chamber comprises at least one small concentric cylinder (11 or 12) and in that the plane partition (3) of the piston (2) comprises at least one central projection.

5. Cylindrical chamber of a liquid counter with an oscillating piston according to one of claims 1 to 4, characterised in that at least one of the lower or upper edges of the piston comprises a groove (19, 20).

6. Cylindrical chamber of a liquid counter with an oscillating piston according to one of claims 4 or 5, characterised in that at least one small cylinder (11, 12) comprises a groove (21, 22) on its edge facing the plane partition (3).

7. Cylindrical chamber of a liquid counter with an oscillating piston according to one of claims 5 or 6, characterised in that the profile of the grooves is in the form of an arc.

8. Liquid counter with oscillating piston characterised in that it comprises a cylindrical chamber of a liquid counter with an oscillating piston according to one of the preceding claims.
